# FASCICULE DE BREVET EUROPEEN

(11) **EP 3 456 404 B1**
(45) Date de publication et mention de la délivrance du brevet: **08.03.2023**
(21) Numéro de dépôt: 18177806.9
(22) Date de dépôt: 14.06.2018
(51) Int. Cl.: B01D 53/86

(54) **PROCEDE ET INSTALLATION DE DENOXIFICATION DE GAZ**
VERFAHREN UND ANLAGE ZUM ENTFERNEN VON STICKOXIDEN AUS GASEN
METHOD AND FACILITY FOR DENOXIFYING GAS

(30) Priorité: 18.09.2017 FR 1758629
(43) Date de publication de la demande: 20.03.2019
(73) Titulaire: Vinci Environnement, 92506 Rueil Malmaison Cedex (FR)
(72) Inventeur: THIBAUT, Romain, 78360 Montesson (FR); BARBIER, Coralie, 78100 SaintGermain en Laye (FR)
(74) Mandataire: Regimbeau

(56) Documents cités:
- EP-A1- 1 576 999
- DE-C1- 19 751 663
- JP-A- H10 192 657
- US-A1- 2009 035 200

## Description

### DOMAINE TECHNIQUE DE L'INVENTION

Le domaine technique de l'invention est celui du traitement des gaz et des fumées issus notamment de l'incinération des ordures ménagères, des déchets, ou encore de la combustion de biomasses, de combustibles issus de déchets.

L'invention concerne une installation et un procédé pour le traitement des gaz à dénoxifier dans un réacteur catalytique de type « low dust » (i.e à poussière réduire) et pour la régénération périodique des modules du réacteur catalytique.

### ARRIERE-PLAN TECHNOLOGIQUE DE L'INVENTION

Les réacteurs catalytiques permettent la dénoxification de gaz issus notamment de l'incinération des ordures ménagères, des déchets, mais aussi de la combustion de biomasse et de combustibles issus des déchets, de sorte que la teneur en oxydes d'azote des gaz finalement rejetés dans l'atmosphère soit inférieure aux seuils règlementaires imposés.

On entend par « dénoxification » d'un gaz la réduction par voie catalytique des oxydes d'azotes contenus dans ledit gaz. Les oxydes d'azotes, désignés de façon générale par la formule NOx, comprennent notamment les composés suivants : NO, NO2, N2O.

Dans les procédés connus, les gaz à traiter sont introduits en entrée d'un réacteur catalytique, en phase de fonctionnement, transitent par un catalyseur approprié afin de subir la dénoxification souhaitée, avant d'être rejetés dans l'atmosphère.

Au contact des gaz contenant des oxydes d'azote, le catalyseur se charge progressivement en différents sels issus des réactions de combinaison entre NH3 et HCl/SO2 résiduels, et perd de ce fait une partie de son activité par l'obstruction des différents sites actifs. Il est donc nécessaire de pouvoir régénérer cycliquement le catalyseur afin qu'il retrouve ses performance et que, en sortie du réacteur catalytique, les teneurs en NOx des gaz restent inférieures aux seuils réglementaires.

Lors d'une phase de régénération, il est connu de faire traverser le catalyseur par des gaz prélevés du circuit principal qu'on échauffe à une température suffisamment importante (de l'ordre de 320°C) pour provoquer la sublimation des sels et leur évacuation sous forme gazeuse (NH3, SO2, HCl).

Dans les réalisations connues, les gaz issus de la régénération sont évacués de la même façon que les gaz traités, voire simultanément dans un même conduit lorsque le réacteur catalytique est pourvu de plusieurs modules dont certains sont en phase de fonctionnement tandis que d'autres sont en phase de régénération. Or, les gaz issus de la régénération contiennent sous forme de gaz des polluants issus des sels ôtés du catalyseur (HCl, SO2, SO3, mais aussi des métaux lourd tel que le mercure).

Pour remédier à ce problème, il a été proposé, dans le document EP 1676627, de réintroduire ces gaz pollués issus de la régénération en entrée de la chaîne de traitement des gaz. Ainsi, les produits sublimés ne sont pas directement rejetés dans l'atmosphère mais sont réinjectés en entrée du filtre à manche de traitement des polluants HCl, SO2. Les gaz de régénération dépollués sont ensuite traités comme des gaz à dénoxifier puis rejetés dans l'atmosphère.

Toutefois, une telle solution consistant à réinjecter des gaz issus de la régénération à une température de l'ordre de 320° C dans le circuit principal de traitement des gaz pose des problèmes, provoque une augmentation inversement proportionnel au nombre de module mis en jeu de l'ordre de 10 à 35°C de la température des gaz à traiter dans l'ensemble de l'installation et provoque une augmentation du volume des gaz à dénoxifier. Ainsi, la solution proposée impose un redimensionnement des installations et des équipements pour supporter ce fonctionnement à une température moyenne plus importante et avec un volume à dénoxifier plus important. Compte tenu des matériaux utilisés pour la réalisation des catalyseurs, des échangeurs, etc., un surdimensionnement de l'installation ou une multiplication des modules dans le cas d'un réacteur catalytique compartimenté n'est pas viable économiquement.

De manière à améliorer le bilan énergétique et économique d'une telle installation de dénoxification avec traitement des gaz issus de la régénération, il a été proposé dans le document EP 2687283 d'utiliser un échangeur de chaleur gaz/gaz pour récupérer en partie la chaleur des gaz issus de la régénération.

Toutefois, une telle solution n'est pas optimisée et ne permet de valoriser énergétiquement et économiquement l'ensemble de l'installation de traitement et de régénération des gaz.
Le document EP-1 576 999 divulgue un procédé conforme au préambule de la revendication 1. Les documents DE 1975 1663 et JPH10192657 présentent aussi des procédés de dénoxification de gaz issus d'une chaudière.

### DESCRIPTION GENERALE DE L'INVENTION

Dans ce contexte, l'invention vise à remédier à ces inconvénients en proposant un procédé et une installation de dénoxification des gaz permettant de traiter les gaz issus de la régénération de manière économique tout en proposant une installation optimisée énergétiquement permettant de récupérer le maximum d'énergie, et notamment toute la puissance thermique injectée pour la phase de régénération du catalyseur ainsi que la chaleur latente des gaz en sortie de catalyseur.

A cette fin, l'invention propose un procédé conforme à la revendication 1.

Outre les caractéristiques qui viennent d'être évoquées dans le paragraphe précédent, le procédé de dénoxification selon l'invention peut présenter une ou plusieurs caractéristiques complémentaires parmi les suivantes, considérées individuellement ou selon toutes les combinaisons techniquement possibles :
- le procédé comporte une étape de récupération de l'énergie des gaz traités en sortie du réacteur catalytique ;
- les gaz de régénération sont obtenus par chauffage d'au moins une partie des gaz à traiter via un moyen de chauffage ;
- la phase de traitement et la phase de régénération sont réalisées simultanément.

L'invention a également pour objet une installation pour la mise en oeuvre du procédé selon l'invention, l'installation étant conforme à la revendication 5.

Avantageusement l'installation est une installation d'incinération d'ordures ménagères ou d'incinération des déchets ou de combustion de biomasse ou de combustion des combustibles issus de déchets.

L'invention et ses différentes applications seront mieux comprises à la lecture de la description qui suit et à l'examen de la figure qui l'accompagne.

### BREVE DESCRIPTION DES FIGURES

Les figures sont présentées à titre indicatif et nullement limitatif de l'invention.

La figure unique, est une représentation schématique d'une installation d'incinération comportant une installation de dénoxification de gaz selon l'invention permettant la dénoxification des gaz provenant de l'incinération des ordures ménagères.

### DESCRIPTION DETAILLEE D'UN EXEMPLE DE REALISATION DE L'INVENTION

La figure unique illustre de manière schématique, une installation d'incinération d'ordures ménagères 100 comportant une chaudière 110 d'incinération d'ordures ménagères et une installation de dénoxification 200 pour le traitement des gaz, des fumées, des effluents gazeux, etc. provenant de la chaudière 110. Dans la suite de la description, on utilisera le terme gaz pour définir l'ensemble des gaz, fumées ou différents effluents gazeux issus de l'incinération d'ordures ménagères, de déchets ou encore issus de la combustion de biomasse, de combustible issus de déchets.

La chaudière 110 présente classiquement une chambre à combustion 111 pour l'incinération des ordures ménagères, une cheminée 112 permettant l'évacuation des gaz issues de l'incinération, un surchauffeur ou plus plusieurs surchauffeurs 113 et un économiseur 114 ou une pluralité d'économiseurs en série en sortie de la chaudière avant leur évacuation dans l'atmosphère par une cheminée 300.

L'économiseur 114 de la chaudière 110 permet classiquement de réguler la température des gaz sortant de la chaudière 110 à une température de l'ordre de 190°C.

Un conduit d'amenée 301 permet la circulation des gaz issus de l'incinération vers l'installation de dénoxification 200.

Les gaz à dénoxifier sont tout d'abord introduits dans différents appareils de traitement préalables, tels qu'un appareil 240 de traitement du HCl, SO2 et un appareil de filtration 250 permettant le dépoussiérage des gaz.

En sortie de l'appareil de filtration 250, l'installation de dénoxification 200 comporte un premier circuit 310 de circulation pour le traitement des gaz à dénoxifier où il est interposé un réacteur catalytique 230 de dénoxification des gaz et un deuxième circuit 320 de circulation pour la régénération du réacteur catalytique 230.

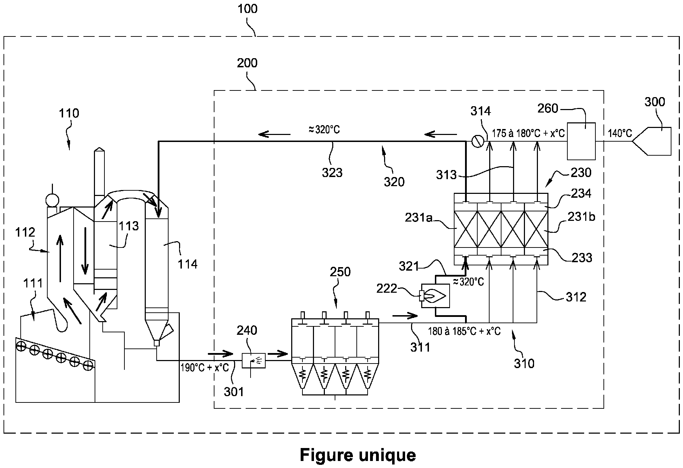

Dans le mode de réalisation représenté, le réacteur catalytique 230 est compartimenté en plusieurs réacteurs isolables, appelés modules 231 de traitement des gaz, quatre modules de traitement des gaz étant représentés à la figure 1. Chaque module 231 de traitement des gaz comporte un compartiment d'entrée des gaz 233, un bloc catalyseur en partie centrale, se présentant par exemple sous la forme d'un produit catalyseur (tel qu'un oxyde de vanadium) en vrac ou fixé sur un garnissage par exemple en forme de nid d'abeille, un compartiment de sortie des gaz 234. Les modules de traitement 231 sont isolables indépendamment les uns des autres par un registre situé au niveau des compartiments d'entrée 233 de chaque module 231. Ainsi, dans le réacteur catalytique 230, il est possible d'isoler individuellement et périodiquement un module de traitement 231a en phase de régénération pendant que les autres modules de traitement 231b sont en phase de dénoxification des gaz. Ce principe de fonctionnement permet notamment un fonctionnement en continu de l'installation d'incinération 100 lorsqu'un module a besoin d'être régénéré.

En phase de fonctionnement, le circuit 310 de traitement des gaz permet d'acheminer les gaz sortant de l'appareil de filtration 250 vers les compartiments d'entrée 233 des modules de traitement 231b via un conduit d'alimentation 311 et des conduits d'entrée 312 reliant le conduit d'alimentation 311 aux compartiments d'entrée 234 des modules de traitement 231b.

Le circuit 310 de traitement des gaz comporte également des conduits 313 de sortie reliés aux compartiments de sortie 234 des modules de traitement 231b qui communiquent avec un conduit d'évacuation 314 relié à une cheminée 300 pour l'évacuation à l'air libre des gaz dénoxifiés.

L'installation de dénoxification 200 selon l'invention présente également de façon avantageuse un économiseur externe 260, ou échangeur de chaleur, permettant de récupérer également une partie de la chaleur des gaz en sortie du réacteur catalytique 230 et avant évacuation vers la cheminée 300.

En phase de régénération, le circuit de régénération 320 permet de régénérer un module de traitement 231a sélectionné du réacteur catalyseur 230 pendant que les autres modules de traitement 231b continuent à traiter les gaz. Pour cela, le circuit de régénération 320 comporte un conduit d'alimentation en gaz de régénération 321 relié directement au conduit d'alimentation 311 et dont la proportion de gaz introduit dans le conduit d'alimentation en gaz de régénération 321 est gérée par une vanne (non représenté). Les gaz circulant dans le conduit d'alimentation en gaz de régénération 321 sont échauffés par un moyen de chauffage 222, par exemple un bruleur à gaz combustible, permettant d'augmenter la température des gaz à une température de l'ordre de 320°C. La sortie du moyen de chauffage 222 communique avec le compartiment d'entrée 233 du module de traitement 231a à régénérer de manière à pouvoir injecter les gaz échauffés dans ledit module 231a.

En sortie du module de traitement 231 a à régénérer, les gaz issus de la régénération contenant les produits sublimés sont isolés du conduit d'évacuation 314 et dirigées, via un conduit de réinjection 323, directement dans la chaudière 110. Plus particulièrement, les gaz de régénération à une température de 320°C sont réinjectés en amont de l'économiseur 114 ou de la pluralité d'économiseurs en série de la chaudière 110 de manière à utiliser le principe de régulation de l'économiseur 114 et de valoriser l'énergie de ces gaz de régénération.

De manière générale, la chaudière d'incinération est surdimensionnée et l'injection des gaz issus de la régénération à une température de 320° C a peu d'incidence sur le fonctionnement de celle-ci. Ainsi, la température de sortie de la chaudière 110 obtenue est de l'ordre 190°C ± 10°C, soit une température de sortie équivalente aux installations de l'état de la technique. La température de sortie de la chaudière 110 peut être légèrement supérieure, par exemple entre 190°C et 199°C, selon la capacité de la chaudière 110 et selon le nombre de module de traitement 231 du réacteur catalytique 230. En effet, plus le nombre de module de traitement 231 augmente, plus le débit des gaz issus de la régénération est faible par rapport au débit global. Par conséquent, plus le nombre de module de traitement 231 augmente plus la température des gaz en sortie de chaudière 110 sera proche de la température de consigne de 190°C obtenue classiquement sans cette étape de réinjection des gaz de régénération.

Ainsi, l'apport de chaleur apportée par les gaz de régénération est valorisé et entièrement récupéré par la régulation de la chaudière sans occasionner des modifications de volume de traitement dans l'installation de dénoxification 200 et sans augmentation de la température globale des gaz à dénoxifier dans l'installation 200.

Grâce à l'invention, les gaz sortant de la chaudière 110 et circulant dans le conduit d'amenée 301 sont donc un mélange de gaz issus de l'incinération des ordures ménagères et de gaz issus de la régénération du catalyseur. Ce mélange de gaz suit ensuite le parcours classique de traitement des gaz de sorte que les gaz relâchés dans l'atmosphère soient conformes aux teneurs maximales réglementaires en polluants (HCl, SO2, NH3, métaux lourds) rejetés dans l'atmosphère.

Grâce à l'installation de dénoxification 200 selon l'invention, il n'est pas nécessaire de surdimensionner cet économiseur externe 260 pour la récupération de l'énergie des gaz de régénération comme dans les installations connues de l'état de la technique puisque la température des gaz au niveau de cet économiseur est équivalente à la température sans régénération. En effet, au niveau de cet économiseur externe 260, la température des gaz est de l'ordre de 175°C - 180°C ce qui correspond à des températures équivalentes à un fonctionnement classique sans régénération.

Grâce à l'invention, les gaz issus de la régénération qui comporte des polluants désorbés du catalyseur (SO2, SO3, métaux lourds tel que le mercure) ne sont pas rejetés dans l'atmosphère mais sont recyclées dans la chaudière 110 puis retraitées dans l'installation de dénoxification 200.

L'invention a été particulièrement décrite pour le traitement des gaz et des fumées issus de l'incinération de déchets ou d'ordure ménagère. Toutefois, l'invention est également applicable au traitement des gaz et des fumées issus de la combustion de biomasse ou de combustibles issus de déchets.

## Revendications

1. Procédé de dénoxification de gaz issus d'une chaudière (110) d'incinération ou de combustion, dans un réacteur catalytique (200) comprenant au moins deux modules (231a, 231b) contenant un catalyseur apte à dénoxifier lesdits gaz, ledit procédé comprenant :
- une phase de traitement consistant à introduire en entrée du réacteur catalytique (230) les gaz à traiter issus de ladite chaudière (110), à les faire passer dans ledit au moins deux modules (231a, 231b), puis à évacuer en sortie du réacteur catalytique (230) les gaz traités
- une phase de régénération pour la régénération d'un module (231a) parmi lesdits au moins deux modules (231a, 231 b) consistant à introduire en entrée du réacteur catalytique (230) des gaz de régénération, à les faire passer dans ledit module (231a) à régénérer et à évacuer séparément les gaz issus de la régénération en sortie du réacteur catalytique (230) ;
le procédé étant **caractérisé en ce que**
les gaz issus de la régénération sont réintroduits dans la chaudière (110),
la chaudière (110) comporte au moins un économiseur (114) et les gaz issus de la régénération sont réintroduits en amont dudit au moins un économiseur (114) ; et
le procédé comporte une étape de récupération de l'énergie des gaz issus de la régénération via l'économiseur (114) de la chaudière (110).

2. Procédé de dénoxification selon la revendication précédente qui comporte une étape de récupération de l'énergie des gaz traités en sortie du réacteur catalytique (230).

3. Procédé de dénoxification selon l'une des revendications précédentes dans lequel les gaz de régénération sont obtenus par chauffage d'au moins une partie des gaz à traiter via un moyen de chauffage (222).

4. Procédé de dénoxification selon l'une des revendications précédentes dans lequel la phase de traitement et la phase de régénération sont réalisées simultanément.

5. Installation (100) pour la mise en oeuvre du procédé selon l'une des revendications précédentes, l'installation comprenant
- une chaudière (110) d'incinération ou de combustion, et pour la dénoxification (200) des gaz issus de la chaudière :
- un réacteur catalytique (230) comprenant au moins deux modules (231a, 231b) comportant un catalyseur apte à permettre la dénoxification des gaz ;
- un conduit d'amenée (311, 312) des gaz à dénoxifier en entrée du réacteur catalytique (230) ;
- un conduit d'évacuation (313, 314) des gaz dénoxifiés en sortie du réacteur catalytique (230) ;
- un conduit d'amenée (321) des gaz de régénération en entrée du réacteur catalytique (230)
- un conduit d'évacuation (323) des gaz issus de la régénération en sortie du réacteur catalytique (230), le conduit d'évacuation (323) des gaz issus de la régénération étant distinct du conduit d'évacuation (313, 314) des gaz dénoxifiés ;
l'installation (100) étant **caractérisée en ce que**
le conduit d'évacuation (323) des gaz issus de la régénération est connecté au niveau de son extrémité aval à la chaudière (110);
la chaudière comporte un économiseur (260) pour la récupération d'énergie des gaz traités en sortie du réacteur catalytique (230).

6. Installation (100) selon la revendication précédente qui est une installation d'incinération d'ordures ménagères ou d'incinération des déchets ou de combustion de biomasse ou de combustion des combustibles issus de déchets.

## Patentansprüche

1. Verfahren zur Denoxifizierung von Gasen, die aus einem Verbrennungs- oder Verfeuerungskessel (110) hervorgegangen sind, in einem katalytischen Reaktor (200), mindestens zwei Module (231a, 231b) umfassend, die einen Katalysator enthalten, der geeignet ist, die Gase zu denoxifizieren, wobei das Verfahren umfasst:
- eine Behandlungsphase, die darin besteht, die zu behandelnden Gase, die aus dem Kessel (110) hervorgegangen sind, am Eingang des katalytischen Reaktors (230) einzuleiten, sie durch die mindestens zwei Module (231a, 231b) zu leiten, und dann die behandelten Gase am Ausgang des katalytischen Reaktors (230) abzuführen;
- eine Regenerationsphase zur Regeneration eines Moduls (231a) aus den mindestens zwei Modulen (231a, 231b), die darin besteht, Regenerationsgase am Eingang des katalytischen Reaktors (230) einzuleiten, sie durch das Regenerationsmodul (231a) zu leiten, und die Gase, die aus der Regeneration hervorgegangen sind, getrennt am Ausgang des katalytischen Reaktors (230) abzuführen;
wobei das Verfahren **dadurch gekennzeichnet ist, dass**
die Gase, die aus der Regeneration hervorgegangen sind, in den Kessel (110) zurückgeführt werden,
der Kessel (110) mindestens einen Economiser (114) beinhaltet, und die Gase, die aus der Regeneration hervorgegangen sind, stromaufwärts von dem mindestens einen Economiser (114) zurückgeführt werden; und
das Verfahren einen Schritt der Energierückgewinnung der Gase, die aus der Regeneration hervorgegangen sind, beinhaltet, über den Economiser (114) des Kessels (110).

2. Denoxifizierungsverfahren nach dem vorhergehenden Anspruch, das einen Schritt zur Energierückgewinnung der behandelten Gase beinhaltet, am Ausgang des katalytischen Reaktors (230).

3. Denoxifizierungsverfahren nach einem der vorhergehenden Ansprüche, wobei die Regenerationsgase durch Erhitzen mindestens eines Teils der zu behandelnden Gase erhalten werden, über ein Heizmittel (222) .

4. Denoxifizierungsverfahren nach einem der vorhergehenden Ansprüche, wobei die Behandlungsphase und die Regenerationsphase gleichzeitig durchgeführt werden.

5. Anlage (100) zur Durchführung des Verfahrens nach einem der vorhergehenden Ansprüche, wobei die Anlage umfasst:
- einen Verbrennungs- oder Verfeuerungskessel (110), und
für die Denoxifizierung (200) der Gase, die aus dem Kessel hervorgegangen sind:
- einen katalytischen Reaktor (230), der mindestens zwei Module (231a, 231b) umfasst, die einen Katalysator beinhalten, der geeignet ist, die Denoxifizierung von Gasen zu ermöglichen;
- einen Zufuhrkanal (311, 312) der zu denoxifizierenden Gase, am Eingang des katalytischen Reaktors (230);
- einen Abfuhrkanal (313, 314) der denoxifizierten Gase, am Ausgang des katalytischen Reaktors (230);
- einen Zufuhrkanal (321) der Regenerationsgase, am Eingang des katalytischen Reaktors (230);
- einen Abfuhrkanal (323) der Gase, die aus der Regeneration hervorgegangen sind, am Ausgang des katalytischen Reaktors (230), wobei der Abfuhrkanal (323) der Gase, die aus der Regeneration hervorgegangen sind vom Abfuhrkanal (313, 314) der denoxifizierten Gase verschieden ist;
wobei die Anlage (100) **dadurch gekennzeichnet ist, dass** der Abfuhrkanal (323) der Gase, die aus der Regeneration hervorgegangen sind, im Bereich seines stromabwärtigen Endes mit dem Kessel (110) verbunden ist;
der Kessel einen Economiser (260) beinhaltet zur Energierückgewinnung der behandelten Gase, am Ausgang des katalytischen Reaktors (230).

6. Anlage (100) nach dem vorhergehenden Anspruch, die eine Anlage zur Verbrennung von Hausmüll oder zur Verbrennung von Abfällen ist oder zur Verfeuerung von Biomasse oder zur Verfeuerung von Brennstoffen, die aus Abfällen hervorgegangen sind.

## Claims

1. A method for denoxifying gases from an incineration or combustion boiler (110), in a catalytic reactor (200) comprising at least two modules (231a, 231b) containing a catalyst capable of denoxifying said gases, said process comprising
- a treatment phase consisting of introducing the gases to be treated from the said boiler (110) into the inlet of the catalytic reactor (230), passing them through the said at least two modules (231a, 231b), and then discharging the treated gases at the outlet of the catalytic reactor (230);
- a regeneration phase for the regeneration of one module (231a) of said at least two modules (231a, 231b) consisting of introducing regeneration gases into the inlet of the catalytic reactor (230), passing them into the said module (231a) to be regenerated and separately discharging the gases resulting from the regeneration at the outlet of the catalytic reactor (230);
the method being **characterized in that**
the gases from the regeneration are returned to the boiler (110),
the boiler (110) has at least one economiser (114) and the gases from the regeneration are reintroduced upstream of the at least one economizer (114); and
the process includes a step of recovering energy from the regeneration gases via the economizer (114) of the boiler (110).

2. A denoxification process according to the preceding claim which comprises a step of recovering energy from the treated gases at the outlet of the catalytic reactor (230).

3. A denoxification process according to any of the preceding claims wherein the regeneration gases are obtained by heating at least part of the gases to be treated via a heating means (222).

4. The denoxification process according to any of the preceding claims wherein the treatment phase and the regeneration phase are performed simultaneously.

5. An installation (100) for carrying out the process according to one of the preceding claims, the installation comprising
- a boiler (110) for incineration or combustion, and
for the denoxification (200) of the boiler gases:
- a catalytic reactor (230) comprising at least two modules (231a, 231b) comprising a catalyst capable of allowing the denoxification of the gases ;
- a conduit (311, 312) for supplying the gases to be denoxified to the inlet of the catalytic reactor (230);
- a discharge pipe (313, 314) for the denoxified gases at the outlet of the catalytic reactor (230);
- a feed line (321) for the regeneration gases to the inlet of the catalytic reactor (230); and
- a duct (323) for discharging the gases resulting from the regeneration at the outlet of the catalytic reactor (230), the duct (323) for discharging the gases resulting from the regeneration being distinct from the duct (313, 314) for discharging the denoxified gases;
the installation (100) being **characterized in that**
the exhaust duct (323) for the regeneration gases is connected at its downstream end to the boiler (110)
the boiler includes an economizer (260) for recovering energy from the treated gases leaving the catalytic reactor (230).

6. An Installation (100) according to the preceding claim, which is an installation for the incineration of household refuse or for the incineration of waste or for the combustion of biomass or for the combustion of fuels from waste.
